# EUROPÄISCHE PATENTSCHRIFT

(11) **EP 1 513 374 B1**
(45) Veröffentlichungstag und Bekanntmachung des Hinweises auf die Patenterteilung: **22.12.2010**
(21) Anmeldenummer: 04014195.4
(22) Anmeldetag: 17.06.2004
(51) Int. Cl.: H05B 3/68

(54) **Wärmelade**
Heating drawer
Tiroir chauffant

(30) Priorität: 02.09.2003 DE 20313616 U; 21.10.2003 DE 20316141 U
(43) Veröffentlichungstag der Anmeldung: 09.03.2005
(60) Teilanmeldung: 10007583.7
(73) Patentinhaber: Wilhelm Gronbach GmbH & Co. KG, 6342 Niederndorf (AT)
(72) Erfinder: Gronbach, Wilfried, 83549 Eiselfing (DE)
(74) Vertreter: Zinnecker, Armin

(56) Entgegenhaltungen:
- DE-A1- 3 015 286
- US-A- 2 535 379
- US-A- 3 146 338
- US-A- 4 904 848
- US-B1- 6 265 695

## Beschreibung

Die Erfindung betrifft eine Wärmelade mit einem Gehäuse, in dem eine Schublade verschieblich geführt ist.

Die Wärmelade kann als gesondertes Gerät verwendet werden. Sie eignet sich allerdings auch zur Verwendung in Kombination mit anderen Geräten, Vorrichtungen oder Einrichtungen, insbesondere mit Elektrogeräten.

In der Küche, und zwar sowohl im privaten Haushalt als auch in einer gewerblichen Küche, stellt sich die Aufgabe, Speisen und/oder Geschirr zu wärmen oder warmzuhalten.

Aus der US-A-2 535 379 ist eine Wärmelade nach dem Oberbegriff des Anspruchs 1 bekannt.

Die DE 30 15 286 A1 offenbart eine Back- und/oder Brateinrichtung mit einer Wärmelade nach dem Oberbegriff des Anspruchs 1.

Aufgabe der Erfindung ist es, eine verbesserte Wärmelade der eingangs angegebenen Art vorzuschlagen.

Erfindungsgemäß wird diese Aufgabe durch die Merkmale des Anspruchs 1 gelöst. Die Schublade weist eine beheizbare Platte auf. Die Speisen und/oder das Geschirr können auf die beheizbare Platte gestellt werden. Sie können dort gewärmt und/oder warmgehalten werden. Die Wärmelade ist dadurch gekennzeichnet, daß unter der beheizbaren Platte eine Reflektor platte vorgesehen ist. Hierdurch kann der Wirkungsgrad verbessert werden.

Vorteithafte Weiterbildungen sind in den Unteransprüchen beschrieben.

Vorteilhaft ist es, wenn die beheizbare Platte Leiterbahnen aufweist. Die Leiterbahnen dienen zur elektrischen Beheizung der Platte. Vorzugsweise handelt es sich um aufgedruckte Leiterbahnen.

Die beheizbare Platte ist vorzugsweise aus Glas.

Nach einer weiteren vorteilhaften Weiterbildung ist eine Stromkupplung vorgesehen, die dazu dient, die Leiterbahnen mit elektrischer Energie zu versorgen. Die Stromkupplung ist vorzugsweise an der Rückwand der Schublade und an der Rückwand des Gehäuses vorgesehen.

In dem Gehäuse kann ein Elektronikgehäuse vorgesehen sein. Das Elektronikgehäuse ist vorzugsweise fest mit dem Gehäuse verbunden. In dem Elektronikgehäuse kann eine Elektronik, insbesondere eine Steuer- und/oder Regelelektronik, untergebracht sein.

Vorteilhaft ist es, wenn die Wärmelade eine Zusatzheizung umfaßt. Die Zusatzheizung ist vorzugsweise im Gehäuse angeordnet.

Vorzugsweise umfaßt die Zusatzheizung ein Gebläse. Dabei kann es sich um ein Querstromgebläse handeln.

Eine weitere vorteilhafte Weiterbildung ist gekennzeichnet durch eine Elektronik zum Regeln der Temperatur durch eine Regelung des Widerstands der beheizbaren Platte. Dies ist insbesondere dann vorteilhaft, wenn die beheizbare Platte Leiterbahnen, die vorzugsweise aufgedruckt sind, aufweist.

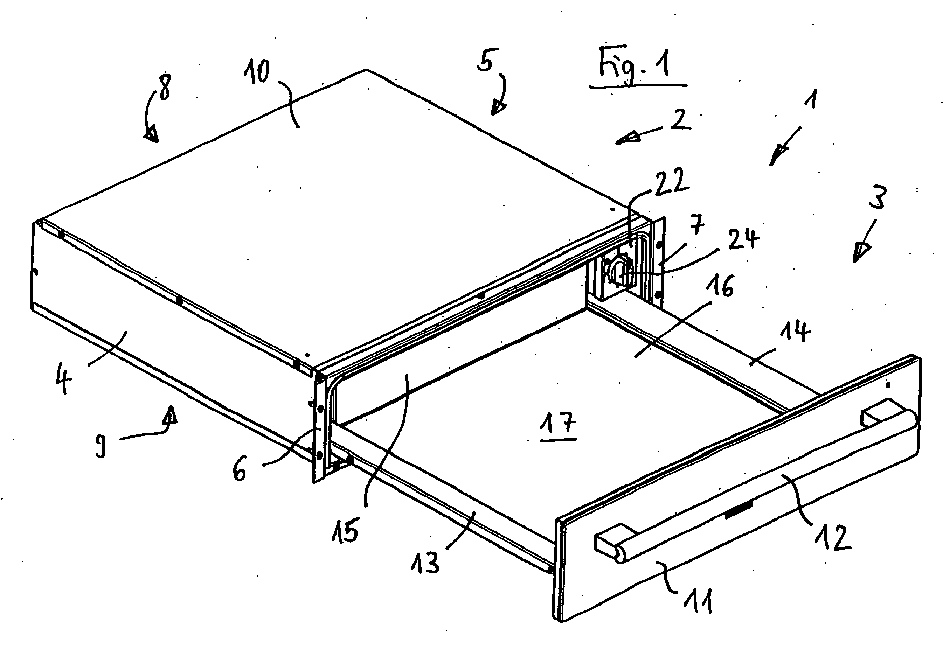

Ein Ausführungsbeispiel der Erfindung wird nachstehend anhand der beigefügten Zeichnung im einzelnen erläutert. In der Zeichnung zeigt
- Fig. 1: eine Wärmelade mit herausgezogener Schublade in einer perspektivischen Ansicht,
- Fig. 2: die in Fig. 1 dargestellte Schublade in einer Ansicht von oben,

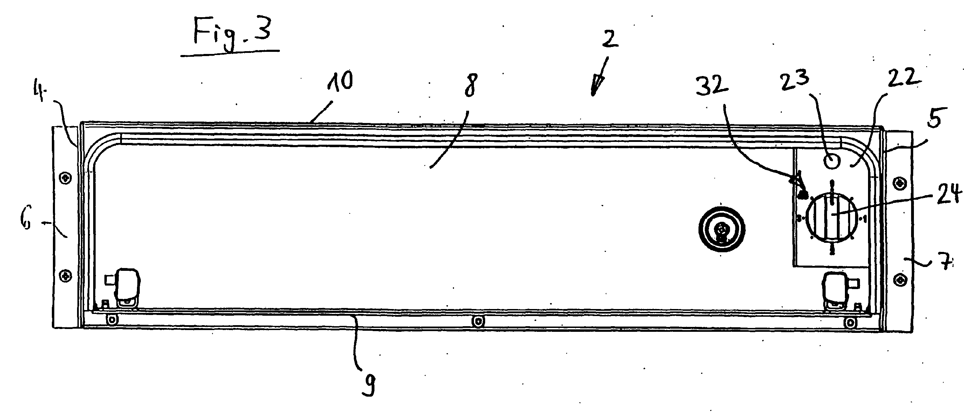

- Fig. 3: das in Fig. 1 dargestellte Gehäuse in einer Ansicht von vorne und
- Fig. 4: eine Zusatzheizung in einem Querschnitt.

Die Wärmelade 1 umfaßt ein Gehäuse 2, in dem eine Schublade 3 verschieblich geführt ist.

Das Gehäuse 2 ist als Einbaugehäuse ausgestaltet. Es umfaßt Seitenwände 4, 5, von denen an der Frontseite Einbaulaschen 6, 7 rechtwinklig nach außen abstehen, in denen Montagelöcher vorgesehen sind, die von Montageschrauben durchgriffen werden, eine hintere Wand 8, eine untere Gehäusewand 9 und eine obere Gehäusewand 10.

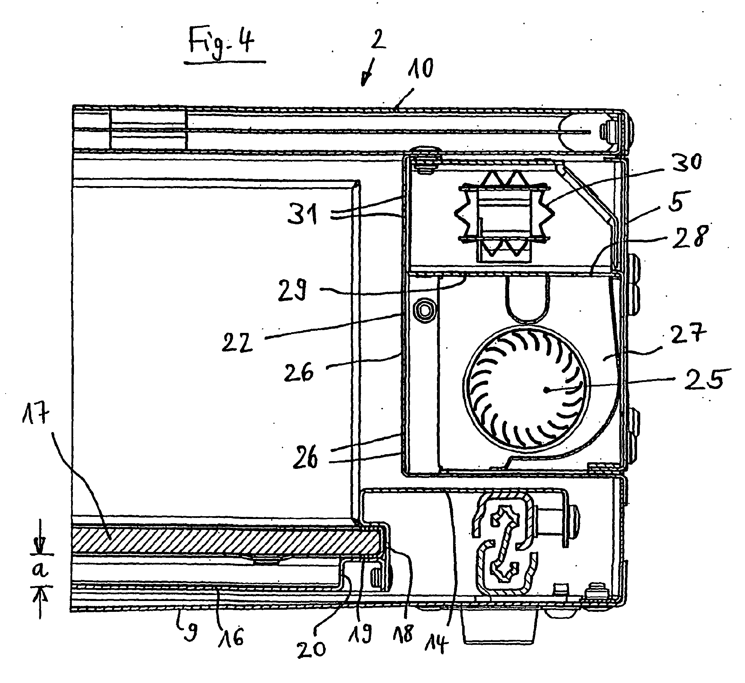

Die Schublade 3 umfaßt eine Frontplatte 11 mit einem Griff 12, seitliche Verstärkungsleisten 13, 14, die Führungen aufweisen, die in entsprechenden Führungen in dem Gehäuse 2 verschieblich geführt sind, eine hintere Querleiste 15 und einen Boden 16 und eine beheizbare Platte 17 aus Glas. Die Platte 17 ist an ihren Rändern in der aus Fig. 4 ersichtlichen Weise vom Rand des Bodens 16 und einem Flansch 18 der Verstärkungsleisten 13, 14 eingefaßt. Der Boden 16 weist im Anschluß an seinen Rand 19 eine nach unten gerichtete Abkröpfung 20 auf, so daß er im Abstand a von der Platte 17 verläuft. Hierdurch bildet der Boden 16 eine Reflektorplatte für die Platte 17.

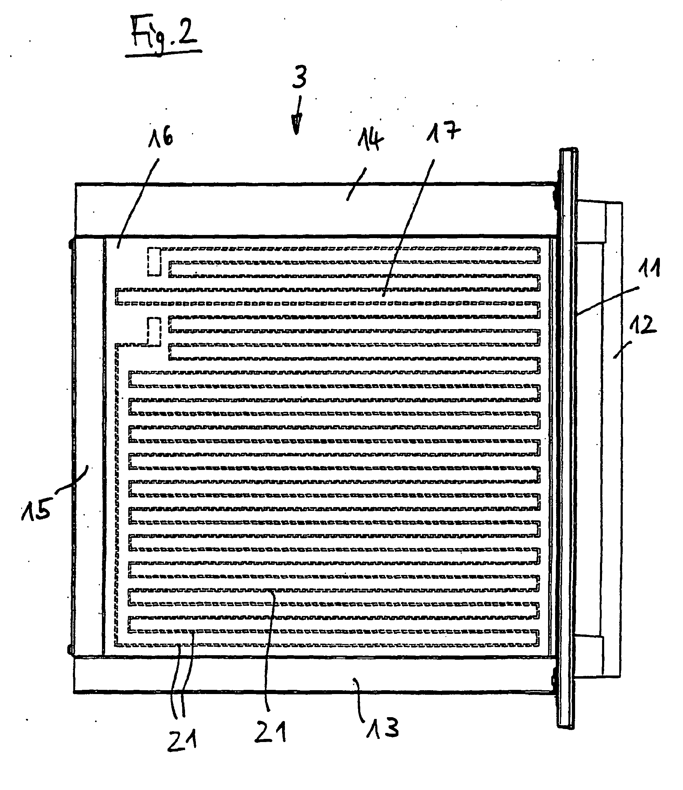

Auf die beheizbare Platte 17 aus Glas sind Leiterbahnen 21 aufgedruckt. Die Leiterbahn 21 verläuft in der aus Fig. 2 ersichtlichen Weise meanderförmig.

Im Bereich der hinteren Querleiste 15 ist eine Stromkupplung vorgesehen, die mit einer Stromkupplung im Bereich der hinteren Wand 8 des Gehäuses 2 zusammenwirkt.

In dem Gehäuse 2 ist ein Elektronikgehäuse 22 vorgesehen, das in der rechten oberen Ecke des Gehäuses 2 mit der oberen Gehäusewand 10 und der rechten Seitenwand 5 des Gehäuses 2 verbunden ist. An der Frontplatte des Elektronikgehäuses 22 sind eine Kontrollleuchte 23 und ein Drehschalter 24 vorhanden. Die in dem Elektronikgehäuse 22 vorhandene Elektronik regelt die Temperatur der Heizung. Der Bediener kann zwischen sieben verschiedenen Stufen einen Sollwert der Temperatur einstellen.

In dem Elektronikgehäuse 22 ist ferner eine Zusatzheizung vorhanden, die in Fig. 4 im Querschnitt dargestellt ist. Die Zusatzheizung umfaßt ein Querstromgebläse 25, durch welches Luft durch die Ansaugschlitze 26 im Elektronikgehäuse 22 angesaugt wird. Die Luft wird durch eine Luftführung 27 und einen Durchbruch 28 in einem Zwischenboden 29 zu einer Heizwendel 30 geleitet, von der sie aufgewärmt wird. Die aufgewärmte Luft verläßt das Elektronikgehäuse 22 durch Luftaustrittsschlitze 31.

Die in dem Elektronikgehäuse 22 vorhandene Elektronik schaltet die Zusatzheizung bei Bedarf zu. Ferner bewirkt die Elektronik ein Ankochen, also einen steilen Temperaturanstieg. Sie regelt die Temperatur dann auf den eingestellten Sollwert ein. Die Elektronik zeigt an, ob die Schublade geschlossen oder nicht geschlossen ist, beispielsweise dadurch, daß die Kontrollleuchte bei nicht geschlossener Schublade blinkt und nach dem Schließen der Schublade durchgehend leuchtet. Die Elektronik zeigt schließlich noch an, ob an dem Gerät eine Störung vorhanden ist.

Das Gehäuse 2 beinhaltet die Vollauszüge für die Schublade 3 mit Selbsteinzug. Zudem ist in dem Gehäuse 2 die Elektronik, die sich im Elektronikgehäuse 22 befindet, integriert. Bei geschlossenem Gerät ist nur die Kontrollleuchte (Signallampe) 23 erkennbar.

Wenn die Leiterbahnen 21, die auf die Unterseite der Glasplatte 17 aufgedruckt sind, von Strom durchflossen werden, erwärmt sich das Glas der Platte 17. Die Energiezufuhr erfolgt über eine Stromkupplung, die sich auf der Rückwand des Gehäuses und auf der Rückwand der Schublade befindet. Bei geschlossener Schublade wird der Stromkreis über die Stromkupplung geschlossen, und zwar nach dem Prinzip des Cordless-Wasserkochers.

Wenn sich der Drehschalter 23 in der Schaltstellung 32, also in der Stufe "Tellerwärmen", befindet, wird die Zusatzheizung automatisch zugeschaltet. Die Zusatzheizung erzeugt eine Zirkulation der Luft in der Schublade 3. Zusätzlich wird die Luft durch die Heizwendel 30 erwärmt.

Die Heizung der Platte 17 besitzt eine PTC-Charakteristik. Dies bedeutet, daß bei zunehmender Temperatur der Platte 17 auch der elektrische Widerstand der Heizung ansteigt. Der spezifische Widerstand der Platte liegt beim Ausführungsbeispiel bei 0,4 Ohm/K. Dieser Effekt wird bei der Regelung ausgenutzt, so daß die Steuerung eine Temperaturregelung durch eine Widerstandsregelung durchführt. Die Platte 17 hat bei RT20 einen bestimmten Widerstand x, der in die Steuerung werkseitig einmal eingelesen wird. Die Steuerung regelt den Widerstand auf den eingestellten Sollwert ein, wodurch die Temperatur auf die diesem Widerstandswert entsprechende Temperatur eingestellt wird. Der Widerstandswert wird nach folgender Funktion berechnet: R = x + (4^{*}n), wobei n die Schaltstufe und R den Widerstand bedeuten. Dies ergibt ein maximales Widerstandsdelta von 28 Ohm. Thermisch gesehen bedeutet dies ein Temperaturdelta von 70° K. Im Ergebnis wird auf diese Weise über den Widerstand die Temperatur geregelt.

Die Anordnung ist derart getroffen, daß die Platte 17 nur dann beheizt wird, wenn die Schublade 3 vollständig geschlossen ist. Hierzu können entsprechende Sensoren vorgesehen sein.

Zum Betrieb der Wärmelade in der Betriebsart "Geschirr vorwärmen" wird zunächst Geschirr in die Schublade 3 geräumt, also auf die Platte 17 gestellt. Der Drehschalter 24 wird auf die Stellung 32 gestellt. Die Kontrollleuchte 23 blinkt. Nach dem Schließen der Schublade 3 leuchtet die Kontrollleuchte 23 durchgehend. Das Gerät heizt.

Die Dauer des Vorwärmens richtet sich nach Material und Dicke des Geschirrs, der Geschirr-Menge, der Höhe und der Anordnung des Geschirrs.

Zum Betrieb der Wärmelade in der Betriebsart "Speisen warmhalten" wird das Geschirr in die Schublade 3 gestellt, also auf die Platte 17 gestellt. Anschließend wird der Drehschalter auf die Stufe 3 gestellt. Die Schublade 3 wird geschlossen. Der Vorheizvorgang wird für 10 Minuten durchgeführt. Anschließend wird die Schublade 3 geöffnet. Die Speisen werden in das vorgewärmte Geschirr gegeben. Anschließend wird die Schublade wieder geschlossen. Die Kontrolleuchte leuchtet durchgehend. Das Gerät heizt.

## Patentansprüche

1. Wärmelade mit einem Gehäuse (2), in dem eine Schublade (3) verschieblich geführt ist, wobei
die Schublade (3) eine beheizbare Platte (17) aufweist, **dadurch gekennzeichnet, daß** unter der beheizbaren Platte (17) eine Reflektorplatte (16) vorgesehen ist.

2. Wärmelade nach Anspruch 1, **dadurch gekennzeichnet, daß** die beheizbare Platte (17) Leiterbahnen (21) aufweist.

3. Wärmelade nach Anspruch 2, **gekennzeichnet durch** eine Stromkupplung an der Schublade (3) und an dem Gehäuse (2).

4. Wärmelade nach einem der vorhergehenden Ansprüche, **dadurch gekennzeichnet, daß** in dem Gehäuse (2) ein Elektronikgehäuse (22) vorgesehen ist.

5. Wärmelade nach einem der vorhergehenden Ansprüche, **gekennzeichnet durch** eine Zusatzheizung.

6. Wärmelade nach Anspruch 5, **dadurch gekennzeichnet, daß** die Zusatzheizung ein Gebläse (25) umfaßt.

7. Wärmelade nach einem der vorhergehenden Ansprüche, **gekennzeichnet durch** eine Elektronik zum Regeln der Temperatur **durch** eine Regelung des Widerstands der beheizbaren Platte (17).

## Claims

1. A warming drawer having a housing (2) in which a drawer (3) is displaceably guided, wherein the drawer (3) has a heatable plate (17), **characterised in that** a reflector plate (16) is provided below the heatable plate (17).

2. A warming drawer in accordance with claim 1, **characterised in that** the heatable plate (17) has conductor tracks (21).

3. A warming drawer in accordance with claim 2, **characterised by** a power coupling at the drawer (3) and at the housing (2).

4. A warming drawer in accordance with one of the preceding claims, **characterised in that** an electronics housing (22) is provided in the housing (2).

5. A warming drawer in accordance with one of the preceding claims, **characterised by** an additional heater.

6. A warming drawer in accordance with claim 5, **characterised in that** the additional heater includes a fan (25).

7. A warming drawer in accordance with one of the preceding claims, **characterised by** electronics for regulating the temperature by a regulation of the resistance of the heatable plate (17).

## Revendications

1. Tiroir chauffant avec un boîtier (2), dans lequel un tiroir (3) est glissé de manière coulissante, le tiroir (3) présentant une plaque chauffante (17), **caractérisé en ce que**, au-dessous de la plaque chauffante (17), une plaque réflectrice (16) est prévue.

2. Tiroir chauffant selon la revendication 1, **caractérisé en ce que** la plaque chauffante (17) présente des pistes conductrices (21).

3. Tiroir chauffant selon la revendication 2, **caractérisé par** un couplage électrique sur le tiroir (3) et sur le boîtier (2).

4. Tiroir chauffant selon une quelconque des revendications précédentes, **caractérisé en ce que** dans le boîtier (2), un boîtier électronique (22) est prévu.

5. Tiroir chauffant selon une quelconque des revendications précédentes, **caractérisé par** un chauffage d'appoint.

6. Tiroir chauffant selon la revendication 5, **caractérisé en ce que** le chauffage d'appoint comprend un ventilateur (25).

7. Tiroir chauffant selon une quelconque des revendications précédentes, **caractérisé par** un système électronique destiné à régler la température par une régulation de la résistance de la plaque chauffante (17).
